# FASCICULE DE BREVET EUROPEEN

(11) **EP 1 160 138 B1**
(45) Date de publication et mention de la délivrance du brevet: **24.03.2004**
(21) Numéro de dépôt: 01401331.2
(22) Date de dépôt: 21.05.2001
(51) Int. Cl.: B60R 21/26

(54) **Générateur hybride à pilier perforateur et à corps bi-tubulaire**
Hybridgasgenerator mit einem Bohrpfosten
Hybrid gas generator with a perforating stem

(30) Priorité: 30.05.2000 FR 0006924
(43) Date de publication de la demande: 05.12.2001
(73) Titulaire: Livbag S.N.C., 75017 Paris (FR)
(72) Inventeur: Haegeman, Christophe, 91120 Palaiseau (FR); Le Baudy, Franck, 91510 Lardy (FR); Perotto, Christian, 29500 Ergue-Gaberic (FR)
(74) Mandataire: Le Faou, Daniel

(56) Documents cités:
- EP-A- 1 053 915
- WO-A-98/09850
- WO-A-98/12078
- DE-A- 19 545 077
- PATENT ABSTRACTS OF JAPAN vol. 1998, no. 14, 31 décembre 1998 (1998-12-31) & JP 10 250525 A (MATSUSHITA ELECTRIC IND CO LTD;MIYATA IND CO LTD), 22 septembre 1998 (1998-09-22)

## Description

La présente invention se rapporte au domaine de la protection des occupants d'un véhicule automobile au moyen d'un coussin gonflable. Plus précisément l'invention concerne un générateur de gaz hybride, de forme tubulaire, permettant de gonfler un tel coussin.

Pour gonfler un coussin de protection des occupants d'un véhicule automobile, on a utilisé, dans le passé, des réservoirs de gaz sous pression ouverts par un robinet pyrotechnique. C'est ainsi que le brevet US 3,690,695 décrit un dispositif pour gonfler un coussin de protection. Ce dispositif est constitué par un réservoir de gaz sous pression qui est isolé de la canalisation menant au coussin par un opercule étanche contre lequel un piston plein à ailettes vient en appui.

En cas de collision, une amorce pyrotechnique placée à l'arrière du piston provoque l'avancée du piston qui déchire l'opercule et permet aux gaz froids sous pression de pénétrer dans la dite canalisation. Comme les gaz chauds provenant de la combustion de la charge pyrotechnique ne peuvent pas se mélanger aux gaz froids, ces derniers sont réchauffés par passage sur un lit de magnésium qui réagit avec eux. Un tel dispositif est dangereux dans son principe de fonctionnement et nécessite une réalisation complexe.

On a alors cherché à développer des générateurs hybrides de gaz contenant d'une part un réservoir de gaz froids sous pression et d'autre part un chargement pyrotechnique capable d'assurer deux fonctions : l'ouverture du réservoir de gaz ainsi que le réchauffement des gaz froids.

La demande PCT WO 98/09850 décrit ainsi un générateur hybride de forme tubulaire contenant un gaz sous pression ainsi qu'un piston couplé à un initiateur pyrotechnique. En cas de collision, la mise à feu de l'initiateur provoque le déplacement du piston qui ouvre le générateur à son extrémité opposée à l'initiateur pyrotechnique et par ailleurs le réchauffement des gaz froids par mélange, à l'intérieur du générateur, de ces derniers avec les gaz chauds fournis par l'initiateur pyrotechnique. Ce faisant on observe une montée brutale de la pression à l'intérieur du générateur et, pour des raisons évidentes de sécurité, la quantité de gaz stockable dans le générateur se trouve limitée bien en dessous de sa valeur théorique maximum. Enfin, la réalisation d'un générateur dans lequel la course du piston doit être guidée sur toute la longueur du générateur est relativement onéreuse.

Pour simplifier la réalisation matérielle du générateur, il a alors été proposé, par exemple par la demande PCT WO98/12078, un type de générateur hybride tubulaire présentant des orifices latéraux de sortie des gaz, le réservoir de gaz froids sous pression se trouvant situé d'un côté de ces orifices, et la chambre pyrotechnique se trouvant située de l'autre côté. L'ouverture du réservoir de gaz est assurée par un piston creux présentant un canal central qui, après ouverture, permet aux gaz chauds de pénétrer dans le réservoir pour se mélanger aux gaz froids. Le mélange réchauffé quitte alors le réservoir par l'espace libre existant autour du piston et résultant de la rupture de l'opercule qui fermait le réservoir.

Si cette solution permet bien de disposer de générateurs hybrides tubulaires relativement simples à réaliser, elle ne supprime pas les inconvénients résultant du fait que les gaz chauds provenant de la combustion du chargement pyrotechnique pénètrent à l'intérieur du réservoir de gaz froids sous pression.

On retrouve ce type d'inconvénients avec les solutions qui utilisent, pour l'ouverture du réservoir, un projectile au lieu d'un piston comme cela est par exemple décrit dans le brevet US 5,464,247, ou dans ceux qui utilisent un piston à pointe profilée comme cela est par exemple décrit dans le brevet DE 19 545 077.

On décrit dans le document JP-A-10 250 525 un générateur qui présente les caractéristiques énoncées dans le préambule de la revendication 1 de la présente demande.

Les générateurs hybrides tubulaires sont particulièrement recherchés pour assurer le gonflage des coussins de protection, frontaux ou latéraux, destinés aux passagers des véhicules automobiles, mais l'homme de métier ne dispose pas, à l'heure actuelle, de générateurs hybrides tubulaires qui, à la fois, soient simples à réaliser et qui assurent intégralement le mélange des gaz chauds provenant de la combustion du chargement pyrotechnique avec les gaz froids stockés dans le réservoir, à l'extérieur de ce dernier.

L'objet de la présente invention est précisément de proposer un tel générateur.

L'invention concerne donc un générateur hybride de gaz comprenant un corps tubulaire présentant une extrémité amont fermée par un dispositif pyrotechnique d'amorçage et de génération de gaz chauds et une extrémité aval fermée de manière étanche aux gaz, le dit corps tubulaire présentant également des orifices de sortie des gaz et contenant une cloison interne présentant un orifice central de section S fermé par un opercule, la dite cloison divisant le dit corps tubulaire en deux parties :
- une partie amont formant une chambre de combustion et de mélange contenant le dispositif pyrotechnique et les orifices de sortie de gaz,
- une partie aval formant une chambre réservoir contenant au moins un gaz sous pression, le dit corps tubulaire étant constitué par deux tubes cylindriques fixés l'un à l'autre par l'une de leurs extrémités, la dite cloison formant avec l'un des deux tubes un élément unique, le dit corps tubulaire ainsi constitué contenant dans sa partie amont, entre le dispositif pyrotechnique et la cloison interne, une pièce support qui est fixée au dit corps sans venir au contact de la dite cloison interne ni des dits orifices de sortie des gaz caractérisé par le fait que ladite pièce-support contient un piston mobile plein constitué par au moins une colonne de section s, inférieure à la section S, qui vient en appui contre l'opercule fermant l'orifice central de la cloison interne, la dite colonne présentant à son extrémité opposée à la dite cloison une base pleine de section So supérieure à S et qui porte des nervures périphériques aptes à venir en butée contre ladite cloison interne, empêchant ainsi la dite base de venir au contact du dit orifice central.

C'est la structure particulière du générateur dans laquelle la cloison interne forme avec l'un des deux tubes constituant le corps du générateur un élément unique qui permet, avec l'emploi d'un piston mobile portant des nervures périphériques empêchant l'obturation de l'orifice central de la dite cloison, de réaliser l'objet de l'invention. En effet, après ouverture de la chambre réservoir par la colonne du piston mobile, les gaz froids peuvent quitter la chambre réservoir par la partie de l'orifice central de la cloison interne laissée libre par la colonne du piston pour pénétrer dans la chambre de combustion et de mélange. Dans le même temps la base élargie du piston sert de déflecteur aux gaz chauds provenant du dispositif pyrotechnique. Ces gaz chauds ne peuvent pas pénétrer dans la chambre réservoir mais sont conduits à se mélanger aux gaz froids sortant de cette dernière pour constituer le mélange gazeux qui quitte le générateur par ses orifices de sortie, la structure du corps du générateur assurant une parfaite fiabilité de fonctionnement.

Selon une première réalisation préférée de l'invention, la dite pièce-support et le dit piston mobile plein isolent le dit dispositif pyrotechnique des orifices de sorties des gaz.

Cette réalisation permet d'assurer une bonne protection du dispositif pyrotechnique et donc une bonne conservation dans le temps du générateur.

Selon une seconde réalisation préférée de l'invention la dite pièce support est constituée par une bague creuse sertie contre le corps du générateur, la dite bague présentant un évidement cylindrique central possédant un épaulement interne de manière à avoir un diamètre d₁ en regard du dispositif pyrotechnique et un diamètre d₂ en regard de la cloison interne, d₂ étant supérieur à d₁, la dite bague étant prolongée en regard de la cloison interne par un col cylindrique creux dont le diamètre intérieur est égal à d₂ et dont le diamètre extérieur est inférieur au diamètre intérieur du corps tubulaire.

Dans ce cas le dit piston mobile plein est avantageusement constitué d'une part par un corps cylindrique présentant une queue cylindrique de diamètre extérieur d₁, une base cylindrique de diamètre extérieur d₃ compris entre d₁ et d₂ et une colonne cylindrique de section s et de longueur 1, et d'autre part par des ailettes, de hauteur h inférieure à la longueur 1 qui entourent la colonne et qui reposent sur la base du dit corps cylindrique, les dites ailettes constituant les nervures périphériques.

Dans cette réalisation la base du piston mobile repose sur l'épaulement interne présenté par la bague-support et la queue du piston, dont la hauteur doit être inférieure à la course du piston, pénètre dans la partie de l'évidemment central de la bague qui se trouve en regard du dispositif pyrotechnique. Après mise à feu du dispositif pyrotechnique, les gaz chauds commencent par pousser le piston mobile plein sans pouvoir se mélanger aux gaz froids provenant de la chambre réservoir. On dispose ainsi d'un générateur hybride qui assure le début du déploiement du coussin de protection uniquement avec des gaz froids.

Selon une troisième réalisation préférée de l'invention les dites ailettes constituent une pièce unique présentant un canal central cylindrique de section s, la dite pièce étant emmanchée en force sur la dite colonne du corps cylindrique du piston mobile plein. Avantageusement le corps cylindrique du piston sera un corps métallique et la dite pièce unique sera constituée par une matière plastique rigide.

Enfin, selon une quatrième réalisation préférée de l'invention les deux tubes cylindriques constituant le corps tubulaire du générateur ont des diamètres extérieurs et intérieurs identiques et sont fixés l'un à l'autre par soudure. Avantageusement la cloison interne formera un élément unique avec le tube constituant la partie amont du générateur. Cette dernière réalisation permet en effet un assemblage particulièrement simple et fiable du générateur selon l'invention comme il sera expliqué en détails plus loin dans la description.

L'invention permet ainsi de disposer d'un générateur tubulaire hybride simple et peu coûteux à assembler. Ce générateur permet de mélanger les gaz chauds et les gaz froids tout en évitant que les gaz chauds ne pénètrent dans la réserve de gaz froids. Dans un volume donné de la chambre réservoir, il est donc possible de comprimer une quantité de gaz plus importante que celle pouvant être stockée dans un générateur hybride de mêmes caractéristiques mais ne présentant pas cette sécurité.

Cette possibilité est renforcée par le fait qu'avant fonctionnement pyrotechnique la colonne du piston mobile vient en appui contre l'opercule qui ferme la chambre réservoir et joue, vis à vis de cet opercule, le rôle d'un pilier mécanique qui augmente sa résistance à la pression.

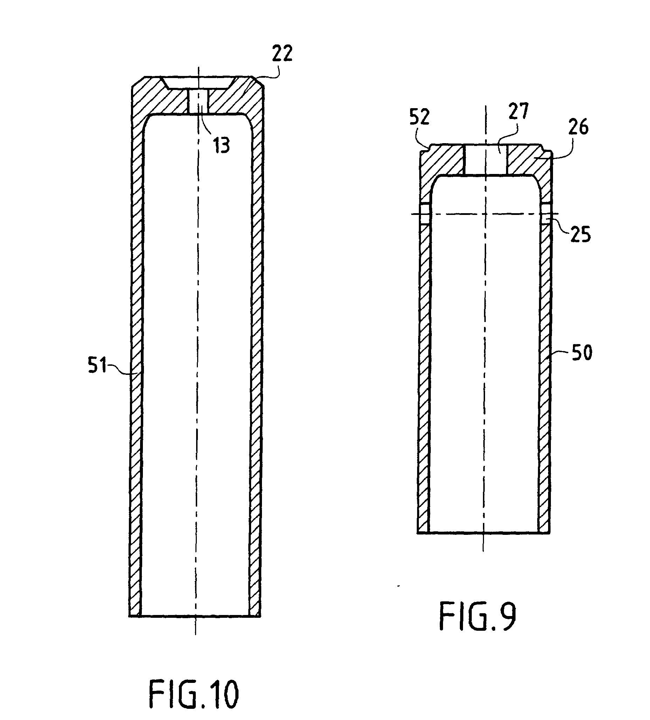

On donne ci-après une description détaillée d'une réalisation préférée de l'invention en faisant référence aux figures 1 à 10.

La figure 1 représente, en perspective partiellement arrachée, un générateur tubulaire hybride selon l'invention.

Les figures **2** à **4** sont des loupes du générateur représenté à la figure 1 dans la zone contenant la bague-support, le piston mobile et la cloison interne, respectivement avant fonctionnement pyrotechnique, en début de fonctionnement pyrotechnique et en cours de fonctionnement pyrotechnique.

La figure **5** est une vue en perspective du corps du piston mobile.

La figure **6** est une vue en perspective de la pièce unique destinée à être emmanchée en force sur la colonne du piston.

La figure **7** représente, en perspective partiellement arrachée, le dispositif pyrotechnique du générateur représenté à la figure 1.

La figure **8** représente, vu en coupe, le dispositif représenté à la figure 7.

La figure **9** représente, vu en coupe axiale, le tube cylindrique constituant la partie amont du générateur représenté à la figure 1.

La figure **10** représente , vu en coupe axiale, le tube cylindrique constituant la partie aval du générateur représenté à la figure 1.

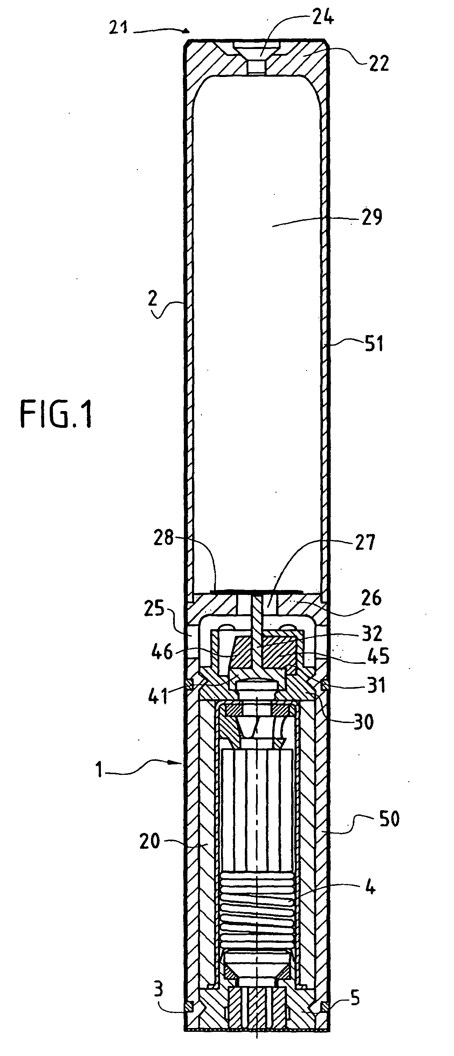

On a représenté à la figure 1 un générateur hybride de gaz 1 selon l'invention. Ce générateur comprend un corps tubulaire 2 constitué par deux tubes cylindriques creux 50 et 51 mis bout à bout et soudés l'un à l'autre. Le tube 50 qui sert à constituer la partie amont du générateur est fermé à l'un de ses extrémités par une cloison 26 présentant un orifice centrale 27. Le tube 50 et la cloison 26 constituent une pièce unique. La cloison 26 présente un épaulement périphérique externe 52 permettant à un tube cylindrique creux 51 de même diamètre et de même épaisseur que le tube 50 de prendre appui sur la cloison 26. Les deux tubes ainsi disposés sont soudés l'un à l'autre. Le tube 51 comporte également à son extrémité opposée à la cloison 26 un fond 22 comportant un orifice central 23. Le tube 51 sert à constituer la partie aval du générateur. Les tubes 50 et 51 sont en acier.

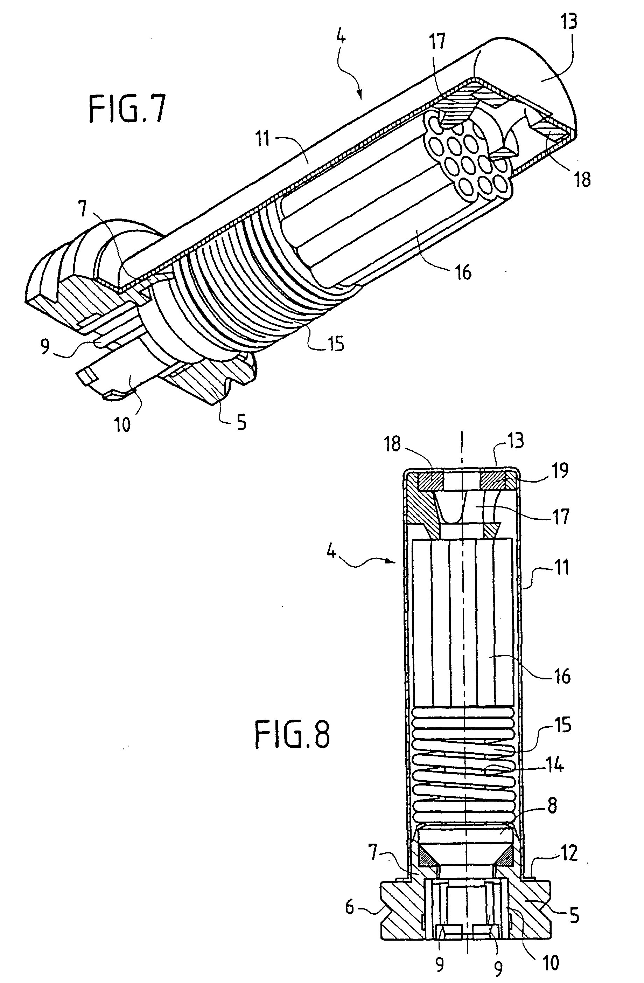

Le tube 50 présente une extrémité amont 3 dans laquelle est sertie une bague métallique creuse 5 faisant partie d'un dispositif pyrotechnique 4 représenté en détails aux figures 7 et 8.

Le dispositif pyrotechnique 4 se compose ainsi d'un porte allumeur 6 comprenant la bague creuse 5 qui est prolongée par un col creux 7 dans lequel est serti un allumeur électropyrotechnique 8 dont les électrodes 9 sont protégées par une bague-shunt 10. Un capuchon métallique cylindrique 11 enserre le col 7 et vient prendre appui sur la base 5 grâce à une partie évasée 12 collée sur la dite base 5. A son extrémité opposée à ladite partie évasée 12, le capuchon 11 présente une face plane 13 prédécoupée et qui peut s'ouvrir sous l'effet d'une augmentation de la pression. L'allumeur 8 présente une partie supérieure étroite 14 entourée par un ressort 15 qui supporte un chargement pyrotechnique 16 en forme de bloc lobé multiperforé. Ce bloc est maintenu dans sa partie supérieure par une cale ajourée 17 qui supporte un disque 18 venant au contact de la face 13 et présentant un orifice central 19. Le chargement pyrotechnique 16 sera avantageusement constitué par un bloc de propergol composite à base de perchlorate d'ammonium et de nitrate de sodium et contenant un liant silicone comme décrit par exemple dans le brevet US 5,610,444, le capuchon 11 assurant, avant fonctionnement, une isolation étanche aux gaz.

Le diamètre extérieur du capuchon 11 étant inférieur au diamètre interne du tube 50, une entretoise tubulaire 20 en matière plastique est intercalée entre le capuchon 11 et le tube 50 pour faire fonction de compensateur de volume et éviter l'éclatement latéral du capuchon 11 au moment de l'allumage du chargement 16.

L'orifice 23 servant au remplissage de la partie aval du générateur par les gaz est fermé de manière étanche par un bouchon de soudure 24.

Comme gaz on pourra utiliser des gaz inertes comme l'azote, l'argon, l'hélium ou des mélanges de gaz inertes et de gaz oxydants comme l'air ou les mélanges argon/oxygène. Ces mélanges gazeux contenant des gaz oxydants sont intéressants à utiliser lorsque le chargement pyrotechnique fournit des gaz réducteurs.

En aval du dispositif pyrotechnique 4 le tube 50 présente des orifices 25 de sortie des gaz dont les centres sont répartis dans un même plan radial perpendiculaire aux génératrices du tube cylindrique 50.

L'orifice central 27 de la cloison 26 est un orifice circulaire fermé par un opercule 28 disposé et fixé sur la surface externe de la dite cloison.

Ainsi constitué, le générateur 1 comprend deux parties distinctes :
- une partie amont contenant le dispositif d'amorçage 4 avec son chargement pyrotechnique 16 ainsi que les orifices 25 de sortie des gaz, cette partie amont formant une chambre de combustion et de mélange 46,
- une partie aval formant une chambre réservoir 29 destinée à contenir au moins un gaz sous pression.

Le tube 50 contient également une pièce-support creuse 30 qui vient au contact de la face 13 du capuchon 11 du dispositif pyrotechnique 4. Cette pièce-support creuse 30 est fixée au tube 50 par sertissage sans venir au contact de la cloison interne 26 ni des orifices 25 de sortie des gaz. La pièce-support 30 contient un piston mobile 31 plein présentant une colonne 32 de section inférieure à la section S de l'orifice central 27 porté par la cloison interne 26. Cette colonne 32 vient en appui contre l'opercule 28 fermant l'orifice 27 et constitue ainsi un pilier qui renforce la résistance du dit opercule à la pression des gaz contenus dans la chambre 29.

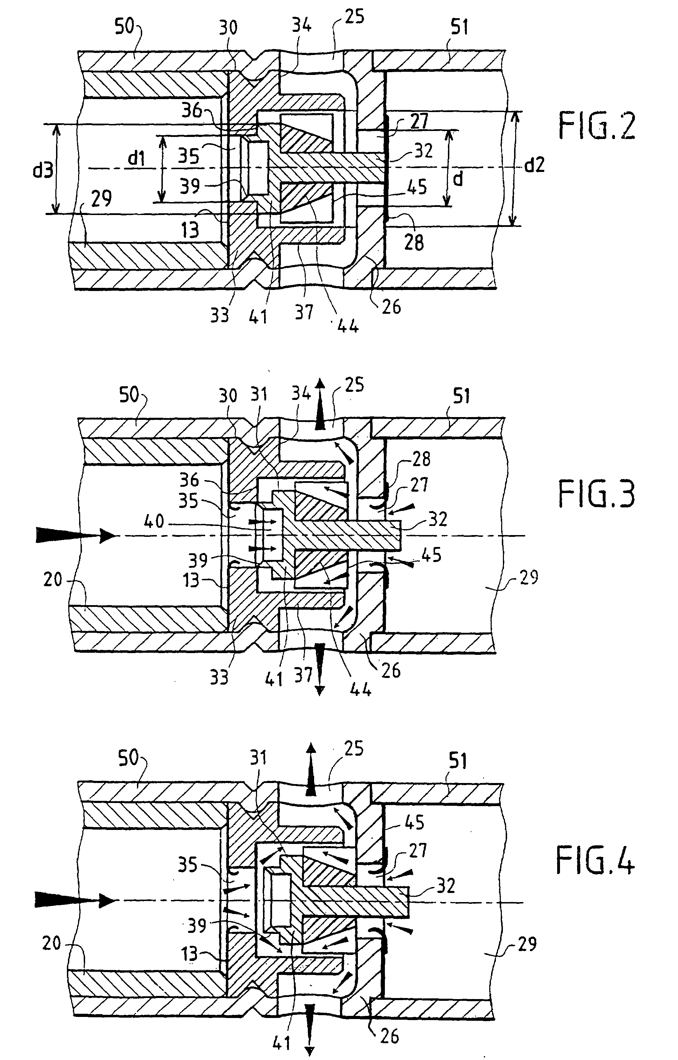

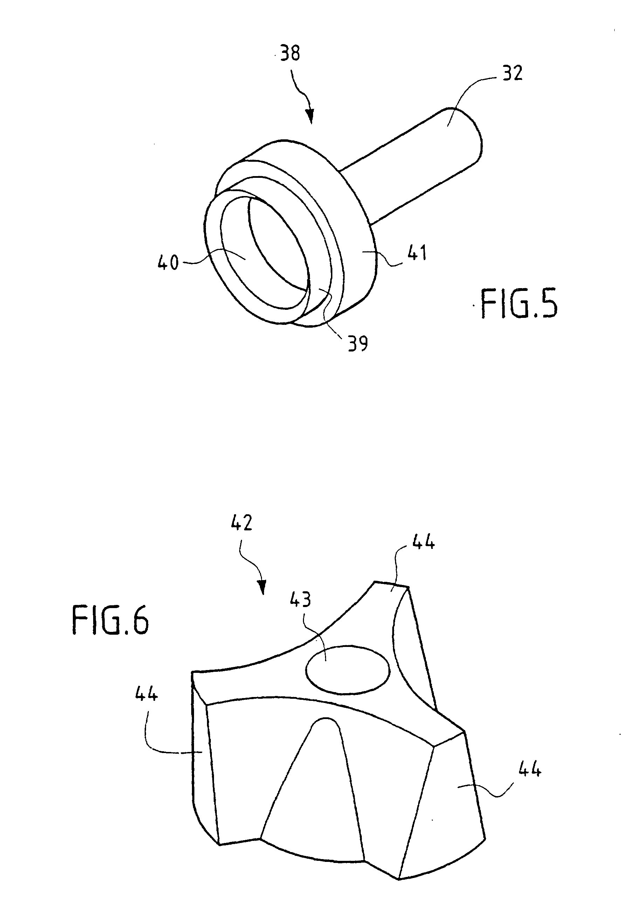

On décrit maintenant en détails la pièce-support 30 et le piston mobile 31 en se référant plus particulièrement à la figure 2 et également aux figures 5 et 6 pour le piston 31.

La pièce-support 30 est une pièce métallique constituée par une bague cylindrique creuse 33 qui vient au contact de l'entretoise 20 et qui est fixée par sertissage dans le tube 2, la surface plane aval 34 de cette bague 33 venant à la limite amont des orifices 25 sans les obstruer. La bague 33 présente un évidement cylindrique central 35 possédant un épaulement interne 36. Ainsi l'évidement 35 a un diamètre d₁ en regard du chargement pyrotechnique 16 et un diamètre distinct d₂ en regard de la cloison interne 26, d₂ étant supérieur à la fois à d₁ et au diamètre d de l'orifice central 27 de la cloison 26. La bague creuse 33 est prolongée en regard de la cloison interne 26 par un col cylindrique creux 37 qui ne vient pas au contact de la dite cloison 26. Le diamètre intérieur de ce col 37 est égal à d₂ tandis que son diamètre externe est inférieur au diamètre intérieur du corps tube 50.

Le piston 31 est d'une part constitué par un corps métallique cylindrique 38 présentant une queue cylindrique 39 de diamètre externe d₁ et présentant un renforcement central 40 dont le rôle sera expliqué plus loin dans la description. Le corps 38 présente également une base cylindrique pleine 41 de diamètre extérieur d₃ compris entre d₁ et d₂. Enfin le corps 38 présente une colonne cylindrique 32 de section s et de longueur 1. Le corps 38 est constitué par une pièce métallique unique, la colonne 32 étant obtenue par refoulement du métal occupant initialement le volume du renforcement 40.

Le piston 31 est d'autre part constitué par une pièce unique 42 en matière plastique rigide de hauteur uniforme h et présentant un canal central cylindrique 43 de section s permettant à la dite pièce 42 d'être emmanchée en force sur la colonne 32 du corps 38 pour constituer le piston 31. La pièce unique 42 présente 3 secteurs latéraux en forme d'ailettes 44. La hauteur h de la pièce unique 42 et donc des ailettes 44 est inférieure à la longueur 1 de la colonne 32 et même, dans la réalisation représentée, inférieure à la hauteur du col 37 de la pièce-support 30.

L'encombrement diamétral maximum de la pièce unique 42 est par ailleurs égal à d₂.

Lorsque le piston 31 est constitué, la pièce 42 repose sur la base 41 du corps 38 et les ailettes 44 entourent la colonne 32, constituant ainsi, vis à vis de cette colonne, des nervures externes 45.

Lorsque le piston 31 est constitué et après mise en place dans la pièce-support 30, la queue 39 du corps 38 pénètre dans la partie amont de l'évidement 35. Ce faisant la pièce-support creuse 30 et le piston 31 séparent de manière étanche aux gaz, les orifices 25 de sortie des gaz et le chargement pyrotechnique 16 contenu dans le dispositif pyrotechnique 4.

L'assemblage du générateur 1 qui vient d'être décrit est très simple à réaliser. On prend le tube 50, on positionne et on sertit la pièce support contenant le piston mobile, on fixe l'opercule 28, on positionne et on soude le tube 51 que l'on remplit de gaz et que l'on ferme. Il ne reste plus alors qu'à introduire et à sertir le dispositif pyrotechnique.

Le fonctionnement du générateur ainsi constitué est maintenant décrit en faisant plus particulièrement référence aux figures 3,4, et 8.

En cas de détection d'une collision nécessitant le fonctionnement du générateur, un signal électrique provoque l'initiation de l'allumeur électropyrotechnique 8 qui met à feu le chargement pyrotechnique 16 dont les gaz de combustion provoquent la rupture de la face 13 du capuchon 11. Les gaz chauds pénètrent alors dans le renforcement 40 de la queue 39 du piston 31 et le poussent vers l'avant sans pouvoir pénétrer dans le col 37 de la pièce-support 30 tant que la queue 39 est engagée dans la partie étroite de l'évidement 35 située en amont de l'épaulement 36. Dès qu'elle commence à avancer, la colonne 32 qui est guidée par les nervures externes 45, provoque la rupture de l'opercule 28 et les gaz froids contenus dans la chambre réservoir 29 commencent à refluer dans la chambre de combustion et de mélange par l'orifice central 27 pour ensuite quitter le générateur 1 par les orifices 25 sans avoir été mélangés aux gaz chauds. Le début du déploiement du coussin de protection se fait donc uniquement par des gaz froids qui n'endommagent pas les pliures du coussin se trouvant à proximité des orifices 25 de sortie des gaz. Il s'agit là d'un avantage supplémentaire apporté par la réalisation préférée de l'invention.

Sous la poussée des gaz de combustion du chargement pyrotechnique 16, le piston 31 continue d'avancer mais sa course se trouve arrêtée lorsque les nervures externes 45 viennent en butée contre la cloison interne 26 empêchant ainsi la base 41 du piston 31 d'obturer l'orifice central 27 de la cloison interne 26. A ce moment là la queue 39 du piston 31 dont la longueur doit être inférieure à la course du piston n'est plus engagée dans la partie étroite de l'évidement 35 et les gaz chauds provenant de la combustion du chargement pyrotechnique 16 peuvent pénétrer dans la chambre de mélange en contournant la base 41 du piston 31 pour se mélanger aux gaz froids provenant de la chambre réservoir 29 et quitter le générateur par les orifices de sortie 25. Il est à observer que la base pleine 41 du piston 31 constitue un déflecteur empêchant les gaz chauds de se diriger directement vers l'orifice central 27 de la cloison interne 26 ce qui les empêche en pratique de pénétrer dans la chambre réservoir 29. A caractéristiques égales, la chambre 29 utilisée dans un générateur selon l'invention peut donc contenir plus de gaz que la même chambre utilisée dans un générateur hybride traditionnel n'empêchant pas l'entrée des gaz chauds dans la chambre réservoir.

## Revendications

1. Générateur hybride (1) de gaz comprenant un corps tubulaire (2) présentant une extrémité amont (3) fermée par un dispositif pyrotechnique (4) d'amorçage et de génération de gaz chauds et une extrémité aval (21) fermée de manière étanche aux gaz, le dit corps tubulaire présentant également des orifice (25) de sortie des gaz et contenant une cloison interne (26) présentant un orifice central (27) de section S fermé par un opercule (28), la dite cloison divisant le dit corps tubulaire en deux parties :
- une partie amont formant une chambre de combustion et de mélange (46) et contenant le dispositif pyrotechnique et les orifices de sortie des gaz,
- une partie aval formant une chambre réservoir (29) contenant au moins un gaz sous pression,
le dit corps tubulaire étant constitué par deux tubes cylindriques (50,51) fixés l'un à l'autre par l'une de leurs extrémités, la dite cloison (26) formant avec l'un des deux tubes un élément unique, le dit corps contenant dans sa partie amont, entre le dispositif pyrotechnique et la dite cloison interne (26), une pièce support (30) qui est fixée audit corps sans venir au contact de la dite cloison interne ni des dits orifices de sortie des gaz, **caractérisé par le fait que** ladite pièce-support (30) contient un piston mobile plein (31) constitué par au moins une colonne (32) de section **s**, inférieure à la section **S**, en appui contre l'opercule (28) fermant l'orifice central (27) de la cloison interne (26), la dite colonne (32) présentant, à son extrémité opposée à la dite cloison une base pleine (41) de section So supérieure à S qui porte des nervures périphériques (45) aptes à venir en butée contre ladite cloison interne (26), empêchant ainsi la dite base (41) de venir au contact du dit orifice central (27).

2. Générateur hybride selon la revendication 1 **caractérisé en ce que**, avant fonctionnement pyrotechnique, la dite pièce-support (30) et le dit piston mobile plein (31) isolent le dit dispositif pyrotechnique des dits orifices (25) de sortie de gaz.

3. Générateur hybride selon la revendication 2 **caractérisé en ce que** la dite pièce-support (30) est constituée par une bague creuse (33) sertie contre le corps (2) du générateur (1), la dite bague présentant un évidement cylindrique central (35) possédant un épaulement interne (36) de manière à avoir un diamètre d₁ en regard du dispositif pyrotechnique et un diamètre d₂ en regard de la cloison interne (26), d₂ étant supérieur à d₁, la dite bague (33) étant prolongée en regard de la cloison interne (26) par un col cylindrique creux (37) dont le diamètre intérieur est égal à d₂ et dont le diamètre externe est inférieur au diamètre intérieur du corps tubulaire (2).

4. Générateur hybride selon la revendication 3 **caractérisé en ce que** le dit piston mobile (31) est constitué d'une part par un corps cylindrique (38) présentant une queue cylindrique (39) de diamètre extérieur d₁, une base cylindrique (41) de diamètre extérieur d₃ compris entre d₁ et d₂ et une colonne cylindrique (32) de section s et de longueur l, et d'autre part par des ailettes (44) de hauteur h inférieure à la longueur l qui entourent la colonne (32) et qui reposent sur la base (41) du dit corps, les dites ailettes constituant les nervures périphériques (45).

5. Générateur hybride selon la revendication 4 **caractérisé en ce que** les dites ailettes (44) constituent une pièce unique (42) présentant un canal central cylindrique de section s, la dite pièce étant emmanchée en force sur la dite colonne (32) du corps cylindrique (38) du piston mobile.

6. Générateur hybride selon la revendication 5 **caractérisé en ce que** le dit corps cylindrique (38) est un corps métallique et **en ce que** la dite pièce (42) est constituée par une matière plastique rigide.

7. Générateur hybride selon la revendication 1 **caractérisé en ce que** les tubes (50,51) ont des diamètres extérieurs identiques et sont fixés l'un à l'autre par soudure.

8. Générateur hybride selon la revendication 7 **caractérisé en ce que** la cloison interne (26) forme un élément unique avec le tube constituant la partie amont.

## Patentansprüche

1. Hybridgasgenerator (1) mit einem röhrenförmigen Körper (2), der ein oberstromiges Ende (3) aufweist, das von einer pyrotechnischen Vorrichtung (4) zur Zündung und Erzeugung heißer Gase verschlossen ist, und ein unterstromiges Ende (21), das gasdicht verschlossen ist, wobei der röhrenförmige Körper außerdem Ausgangsöffnungen (25) für die Gase aufweist und eine innere Trennwand (26) enthält, welche eine zentrale, von einem Innenhütchen (28) verschlossene Öffnung (27) mit **S**-förmigem Querschnitt aufweist, wobei die Trennwand den röhrenförmigen Körper in zwei Bereiche unterteilt:
- einen oberstromigen Bereich, der eine Brenn- und Mischkammer (46) bildet und die pyrotechnische Vorrichtung und die Gasausgangsöffnungen enthält,
- einen unterstromigen Bereich, der eine Sammelkammer (29) bildet, welche zumindest ein unter Druck stehendes Gas enthält,
wobei der röhrenförmige Körper von zwei zylindrischen, mit einem ihrer Enden aneinander befestigten Rohren (50, 51) gebildet ist, wobei die Trennwand (26) mit dem einen der beiden Rohre ein einziges Element ausbildet, wobei der Körper in seinem oberstromigen Bereich zwischen der pyrotechnischen Vorrichtung und der inneren Trennwand (26) ein Stützteil (30) aufweist, das an dem Körper befestigt ist, ohne mit der inneren Trennwand oder den Gasausgangsöffnungen in Kontakt zu kommen, **dadurch gekennzeichnet, dass** das Stützteil (30) einen beweglichen, massiven Kolben (31) aufweist, der von zumindest einer Säule (32) mit einem Querschnitt **s**, der kleiner ist als der Querschnitt **S,** gebildet ist, und der gegen das Innenhütchen (28) anliegt, das die zentrale Öffnung (27) der inneren Trennwand (26) verschließt, wobei die Säule an ihrem der Trennwand gegenüberliegenden Ende eine massive Basis (41) mit einem Querschnitt **So** aufweist, der größer ist als **S**, wobei die Basis Umfangsrippen (45) trägt, die dazu in der Lage sind, in Anschlag gegen die innere Trennwand (26) zu kommen, wodurch verhindert wird, dass die Basis (41) in Kontakt mit der zentralen Öffnung (27) kommt.

2. Hybridgasgenerator gemäß Anspruch 1, **dadurch gekennzeichnet, dass** vor dem pyrotechnischen Betrieb das Stützteil (30) und der bewegliche, massive Kolben (31) die pyrotechnische Vorrichtung gegen die Gasausgangsöffnungen (25) isolieren.

3. Hybridgasgenerator gemäß Anspruch 2, **dadurch gekennzeichnet, dass** das Stützteil (30) von einem hohlen Ring (33) gebildet ist, der gegen den Körper (2) des Generators (1) gepresst ist, wobei der Ring eine zentrale zylindrische Aussparung (35) aufweist, welche einen inneren Ansatz (36) derart umfasst, dass sie gegenüber der pyrotechnischen Vorrichtung einen Durchmesser d₁ und gegenüber der inneren Trennwand (26) einen Durchmesser d₂ aufweist, wobei d₂ größer als d₁ ist, wobei der Ring (33) gegenüber der inneren Trennwand (26) von einem hohlen, zylindrischen Hals (37) verlängert ist, dessen Innendurchmesser gleich d₂ ist und dessen Außendurchmesser kleiner als der Innendurchmesser des röhrenförmigen Körpers (2) ist.

4. Hybridgasgenerator gemäß Anspruch 3, **dadurch gekennzeichnet, dass** der bewegliche Kolben (31) gebildet ist einerseits von einem zylindrischen Körper (38), der ein zylindrisches Endstück (39) mit einem Außendurchmesser d₁, eine zylindrische Basis (41) mit einem Außendurchmesser d₃, der zwischen d₁ und d₂ liegt, und eine zylindrische Säule (32) mit einem Querschnitt s und einer Länge I aufweist, und andererseits von Flügeln (44) mit einer Höhe h, die kleiner ist als die Länge I, welche die Säule (32) umgeben, und welche auf der Basis (41) des Körpers ruhen, wobei die Flügel die Umfangsrippen (45) bilden.

5. Hybridgasgenerator gemäß Anspruch 4, **dadurch gekennzeichnet, dass** die Flügel (44) ein einziges Teil (42) bilden, das einen zentralen, zylindrischen Kanal mit Querschnitt s aufweist, wobei das Teil mit Kraft auf die Säule (32) des zylindrischen Körpers (38) des beweglichen Kolbens aufgepresst ist.

6. Hybridgasgenerator gemäß Anspruch 5, **dadurch gekennzeichnet, dass** der zylindrische Körper (38) ein Metallkörper ist, und dass das Teil (42) aus einem steifen Plastikmaterial besteht.

7. Hybridgasgenerator gemäß Anspruch 1, **dadurch gekennzeichnet, dass** die Rohre (50, 51) identische Außendurchmesser aufweisen und durch Verschweißen aneinander befestigt sind.

8. Hybridgasgenerator gemäß Anspruch 7, **dadurch gekennzeichnet, dass** die innere Trennwand (26) ein einziges Element mit dem Rohr bildet, welches den oberstromigen Bereich bildet.

## Claims

1. Hybrid gas generator (1) comprising a tubular body (2) with an upstream end (3) closed by a pyrotechnic primer and hot-gas-generating device (4) and a downstream end (21) which is closed in a gastight manner, the said tubular body also having gas outlet orifices (25) and containing an internal partition (26) with a central orifice (27) of cross section **S** closed by a diaphragm (28), the said partition dividing the said tubular body into two parts :
- an upstream part forming a combustion and mixing chamber (46) and containing the pyrotechnic device and the gas outlet orifices,
- a downstream part forming a reservoir chamber (29) containing at least one pressurized gas,
the said tubular body consisting of two cylindrical tubes (50, 51) joined together by one of their ends, the said partition (26) being of one piece with one of the two tubes, the said body, in its upstream part, between the pyrotechnic device and the said internal partition (26), containing a support piece (30) which is fixed to the said body without coming into contact with the said internal partition or with the said gas outlet orifices, **characterized in that** the support piece (30) contains a solid mobile piston (31) consisting of at least one column (32) of cross section **s,** smaller than the cross section **S,** which rests against the diaphragm (28), closing the central orifice (27) of the internal partition (26), the said column (32), at its opposite end to the said partition, having a solid base (41) of cross section **So** larger than **S** and which bears peripheral ribs (45) capable of coming into abutment against said internal partition preventing the said base (41) from coming into contact with the said central orifice (27).

2. Hybrid generator according to Claim 1, **characterized in that**, prior to pyrotechnic operation, the said support piece (30) and the said slid mobile piston (31) isolate the said pyrotechnic device (16) from the said gas outlet orifices (25).

3. Hybrid generator according to Claim 2, **characterized in that** the said support piece (30) consists of a hollow ring (33) crimped against the body (2) of the generator (1), the said ring having a central cylindrical recess (35) which has an internal shoulder (36) so that it has a diameter d₁ facing the pyrotechnic device and a diameter d₂ facing the internal partition (26), d₂ being greater that d₁, the said ring (33) being extended, facing the internal partition (26), by a hollow cylindrical neck (37), the inside diameter of which is equal to d₂, and the outside diameter of which is smaller than the inside diameter of the tubular body (2).

4. Hybrid generator according to Claim 3, **characterized in that** the said mobile piston (31) consists, on the one hand, of a cylindrical body (38) which has a cylindrical shank (39) of outside diameter d₃ between d₁ and d₂ and a cylindrical column (32) of cross section **s** and of length **I** and, on the other hand, of fins (44) of height **h** smaller than the length **I** which surround the column (32) and which rest on the base (41) of the said body, the said fins constituting the peripheral ribs (45).

5. Hybrid generator according to Claim 4, **characterized in that** the said fins (44) constitute a single piece (42) exhibiting a cylindrical central duct of cross section **s**, the said piece being force fitted onto the said column (32) of the cylindrical body (38) of the mobile piston.

6. Hybrid generator according to Claim 5, **characterized in that** the said cylindrical body (38) is a metal body and **in that** the said piece (42) is made of a rigid plastic.

7. Hybrid generator according to Claim 1, **characterized in that** the tubes (50, 51) have the same outside diameters and are joined together by welding.

8. Hybrid generator according to Claim 7, **characterized in that** the internal partition (26) is of one piece with the tube that forms the upstream part.
